# EUROPEAN PATENT APPLICATION

(11) **EP 1 566 313 A1**
(43) Date of publication of application: **24.08.2005**
(21) Application number: 05002325.8
(22) Date of filing: 03.02.2005
(51) Int. Cl.: B60R 21/20, B60N 2/42, B60N 2/427

(54) **Occupant protection system**

(30) Priority: 19.02.2004 JP 2004043130
(71) Applicant: TAKATA CORPORATION, Tokyo 106-8510 (JP)
(72) Inventor: Itoga, Yasuo c/o Takata Corp., Tokyo 106-8510 (JP); Yoshikawa, Hiromichi c/o Takata Corp., Tokyo 106-8510 (JP); Kumagai, Masayoshi c/o Takata Corp., Tokyo 106-8510 (JP)
(74) Representative: Vossius & Partner

(57) **Abstract**

To provide an occupant protection system having a preferable cushion characteristic even at the front part of the seat.

An occupant protection system 10 includes an airbag 12 disposed on S-springs 2 and inflatable to push a seat cushion upward while being supported from below by the S-springs 2, and a gas generator 14 for inflating the airbag 12. The airbag 12 extends along the lateral width of the seat, of which the left and right ends are fixed to left and right side frames 1a and 1b with bolts 16, respectively.

The airbag 12 is normally disposed on the S-springs 2 in an uninflated state and in a slightly loose state lengthwise. As the seat cushion and the S-springs 2 which support it are moved downward as an occupant sits in the seat cushion, also the airbag 12 can be moved (deformed).

## Description

The present invention relates to an occupant protection system for protecting an occupant of a vehicle such as a car in the event of a collision and, more particularly, it relates to an occupant protection system for preventing the body of the occupant from moving forward and downward by restraining the waist of the occupant during a front collision.

As a system for protecting an occupant in the event of a car collision, JP-A-2002-79861 describes an occupant protection systems in which the front part of a seat cushion is pushed up or hardened in a car collision to prevent a submarine phenomenon such that the occupant passes under a lap belt even with a seat belt during a front crash.

In the occupant protection system of the reference, the seat frame includes a rigid support member such as a seat pan, on which an airbag is disposed.

The occupant protection systems disclosed in JP-A-2002-79861 needs to dispose a rigid support member for supporting the airbag from below, thus having the possibility of reducing the cushion characteristic of the front part of the seat.

Accordingly, it is an object of the present invention to provide an occupant protection system having a preferable cushion characteristic even at the front part of the seat.

An occupant protection system according to the present invention (Claim 1) includes: a seat frame having a seat cushion placed thereon; an inflatable airbag disposed for pushing the front part of the seat cushion from below; and a gas generator for inflating the airbag in an emergency. The airbag is disposed on an elastic body provided to the seat frame.

In the occupant protection system according to the invention, the airbag extends along the lateral width of the seat and the elastic member extends longitudinally.

### (Corresponding to Claim 2)

In the occupant protection system according to the invention, a support plate is disposed on the elastic body and the airbag is disposed on the support plate.

### (Corresponding to Claim 3)

In the occupant protection system according to the invention, the support plate is mounted elastically to the seat frame so as to move vertically. (Corresponding to Claim 4)

In the occupant protection system according to the invention, an inflatable airbag for pushing a seat cushion from below is disposed on an elastic body of a seat frame having the seat cushion placed thereon. Accordingly, the providing of the airbag prevents or decreases the reduction of the seat cushion characteristic.

In the occupant protection system according to the invention, there is no need to dispose the airbag on the rigid support member such as a seat pan, thus having high flexibility in arranging the airbag.

In the occupant protection system according to the invention, it is preferable that the airbag extend along the lateral width of the seat and that the elastic member extend longitudinally. Since the airbag is disposed to extend along the lateral width of the seat, the front part of the seat cushion is pushed from below in a wide region across the width by the inflated airbag. Also, the elastic body is disposed to extend longitudinally, or in the extending direction and the crossing direction of the airbag. Thus, the inflated airbag can be firmly supported from below by the elastic body.

According to the invention, a support plate may be disposed on the elastic body and the airbag may be disposed on the support plate. With such a structure, when the airbag is pushed downward via the seat cushion, the reaction force from the elastic body is dispersed across the entire airbag owing to the support plate and as such, the airbag is supported substantially equally and entirely via the support plate.

In that case, it is preferable that the support plate be mounted elastically to the seat frame so as to move vertically. This structure prevents or decreases the reduction of the seat cushion characteristic even with the support plate disposed on the elastic body.

Embodiments of the present invention will be described with reference to the drawings.
Fig. 1 is an explanatory diagram of an occupant protection system according to an embodiment of the present invention.
Fig. 2 is an explanatory diagram of an occupant protection system according to another embodiment of the present invention.
Fig. 3 is an explanatory diagram of an occupant protection system according to yet another embodiment of the present invention.

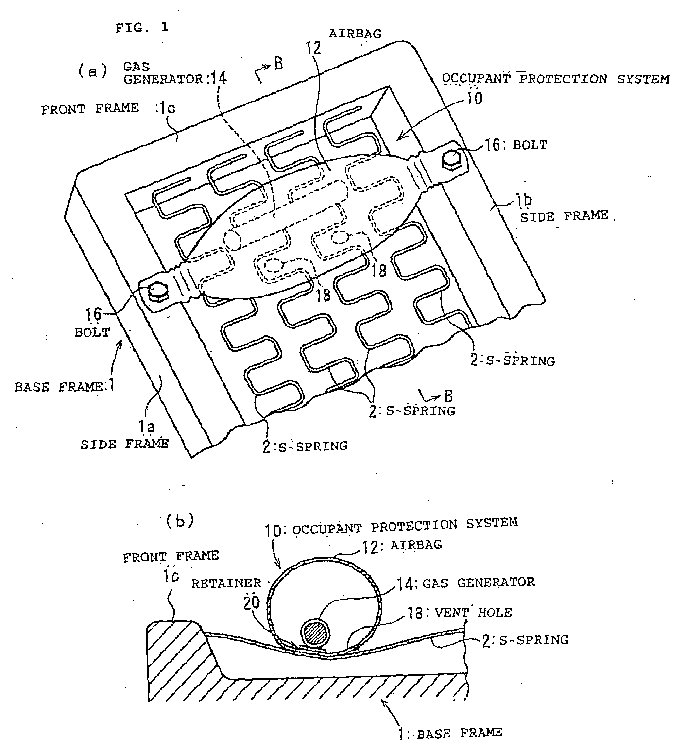

Fig. 1(a) is a perspective view of an essential part of the base frame of a seat including an occupant protection system according to an embodiment of the invention. Fig. 1(b) is a cross-sectional view taken along line B-B of Fig. 1(a), showing an airbag in an inflated state.

The frame that constructs a car seat includes a base frame 1 and a back frame (not shown) which is rotatably connected to the base frame 1 via a support shaft (not shown) and a reclining device (not shown). The back frame has a headrest at the upper part (not shown).

As shown in Fig. 1(a), the base frame 1 includes a pair of side frames 1a and 1b extending longitudinally along the left and right sides of the seat, a front frame 1c disposed across the front parts of the side frames 1a and 1b, and a rear frame (not shown) disposed across the rear parts of the side frames 1a and 1b. Between the front frame 1c and the rear frame, S-springs 2 are disposed as an elastic body. As shown in the drawing, the S-springs 2 extend longitudinally from the front frame 1c to the rear frame while winding their way from side to side. Between the front frame 1c and the rear frame, the multiple S-springs 2 are disposed laterally in multiple rows.

The base frame 1 has a seat cushion (not shown) made of urethane etc. thereon (on the S-springs 2). Also the back frame mounts a seat back (cushion) (not shown) made of the same material as that of the seat cushion.

An inflatable airbag 12 of the occupant protection system 10 is disposed on the S-springs 2 in the front part of the base frame 1 (in the region under the front part of the seat cushion).

The occupant protection system 10 is disposed on the S-springs 2 (between the S-springs 2 and the seat cushion) and includes an airbag 12 which is inflatable so as to push up the seat cushion while being supported from below by the S-springs 2 and a gas generator 14 for inflating the airbag 12. As shown in Fig. 1(a), the airbag 12 extends along the width of the seat, of which the opposite ends are fixed to the left and right side frames 1a and 1b with bolts 16, respectively. Although not shown, the airbag 12 has washers on the opposite ends thereof. The airbag 12 has a vent hole 18.

The lateral length of the airbag 12 in an uninflated state is slightly larger than the distance between the left and right side frames 1a and 1b and, in normal state (when the airbag 12 is in an uninflated state), the airbag 12 is placed in a slightly loose condition between the side frames 1a and 1b. Accordingly, when the seat cushion is pushed downward when an occupant sits in the seat cushion, or the like, the airbag 12 follows the downward movement (deformation) of the seat cushion and the S-springs 2 with the movement.

Although not shown, the airbag 12 according to the embodiment includes a cylindrical bag body and a cylindrical mesh webbing that surrounds the bag body. The bag body is a long folded body. The mesh webbing is constructed of a woven fabric which extends freely in the radial direction but hardly extends lengthwise (along the width of the seat), of which the opposite ends are fixed to the side frames 1a and 1b with bolts, respectively.

Accordingly, when the airbag 12 inflates, the mesh webbing is tightened longitudinally as the mesh webbing expands in the radial direction, thus eliminating loosening of the airbag 12 in an uninflated state.

In this embodiment, a rod-like gas generator 14 is disposed in the airbag 12. The gas generator 14 is disposed to extend laterally (along the length of the airbag 12) and mounted to the lower inner surface of the airbag 12 via a retainer 20. The retainer 20 includes a base (not shown) disposed along the lower inner surface of the airbag 12 and a band (not shown) for fixing the gas generator 14 to the base. The gas generator 14 has gas ports (not shown) around the circumference and, in operation, it emits a jet of gas from the gas ports in the radial direction (radially with respect to the airbag 12).

In the occupant protection system 10 with such a structure, when a front collision of a car is detected by a sensor (not shown), the gas generator 14 emits a jet of gas to inflate the airbag 12 upward so as to increase the thickness (diameter) while being supported from below by the S-springs 2, as shown in Fig. 1(b). As a result, the front part of the seat cushion is pushed up or hardened, thus preventing the forward movement of the waist of the occupant.

In this occupant protection system 10, the airbag 12 is normally disposed on the S-springs 2 in an uninflated state and in a slightly loosened state lengthwise. When the seat cushion and the S-springs 2 for supporting it are moved (deformed) downward as the occupant sits in the seat cushion, also the airbag 12 can be moved (be deformed). This prevents or decreases the reduction of the cushion characteristic of the seat owing to providing the occupant protection system 10.

In the occupant protection system 10, there is no need to dispose the airbag 12 on the rigid support member such as a seat pan, thus having high flexibility in arranging the airbag 12.

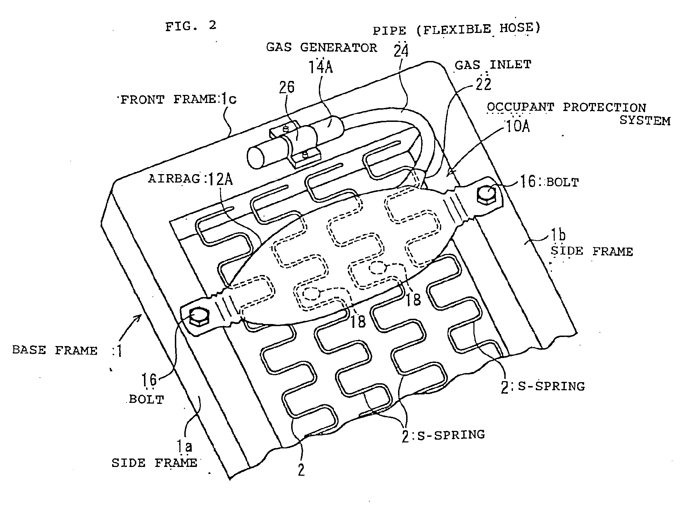

Although in the embodiment the gas generator 14 is disposed inside the airbag 12, the gas generator may be disposed outside the airbag. Fig. 2 is a perspective view of an essential part of the base frame of a seat including an occupant protection system 10A with such a structure.

Also in the occupant protection system 10A of Fig. 2, an airbag 12A is disposed on the S-springs 2 to extend along the width of the seat, of which the opposite ends are fixed to the left and right side frames 1a and 1b with the bolts 16, respectively.

In this embodiment, a gas inlet 22 is provided at one end of the length of the airbag 12A. The airbag 12A is supplied with gas from a gas generator 14A through a pipe (flexible hose) 24 connected to the gas inlet 22.

The gas generator 14A of this embodiment has a cylindrical casing, one end of which has a gas port (not shown). The gas generator 14A is disposed along the front frame 1c of the base frame 1, with the length directed laterally. Reference numeral 26 denotes a bracket that fixes the gas generator 14A to the front frame 1c.

The pipe 24 is connected to the gas port of the gas generator 14A at one end and connected to the gas inlet 22 of the airbag 12A at the other end. In this embodiment, the pipe 24 is a flexible hose, which can be deformed freely while maintaining the gas circulation in the interior as the airbag 12A moves vertically following the movement (deformation) of the seat cushion and the S-springs 2.

The other structures of the occupant protection system 10A are the same as those of the occupant protection system 10 of Fig. 1, in which the same reference numerals of Fig. 2 as those of Fig. 1 denote the same components.

In the occupant protection system 10A with such a structure, since the gas generator 14A is disposed outside the airbag 12, the thickness of the airbag 12A in an uninflated state can be reduced and so a more preferable seat cushion characteristic (sitting quality) is provided.

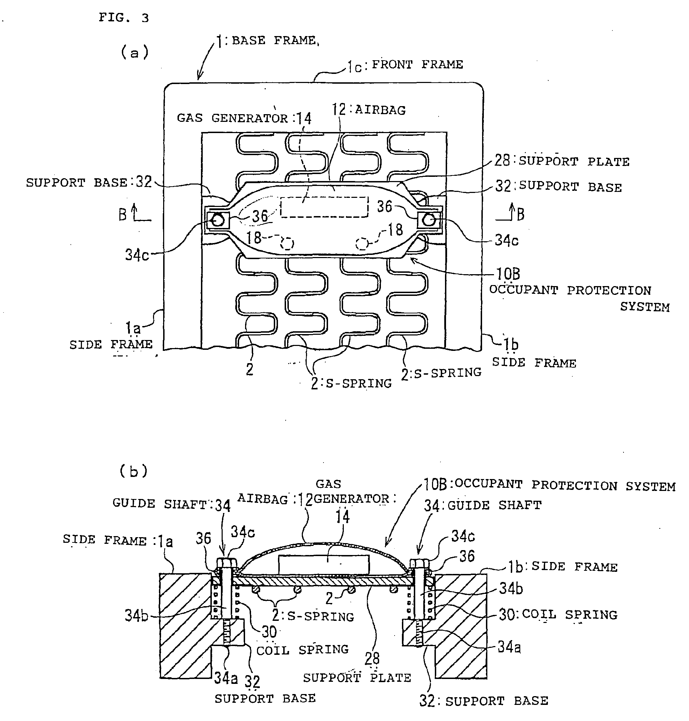

Fig. 3(a) is a top view of an essential part of the base frame of a seat including an occupant protection system 10B according to another embodiment. Fig. 3(b) is a cross-sectional view taken along line B-B of Fig. 3(a).

The occupant protection system 10B has a support plate 28 on the S-springs 2, on which the airbag 12 is placed.
The support plate 28 of this embodiment can be moved elastically and vertically. When a seat cushion and the S-springs 2 are moved (deformed) vertically as an occupant sits or rises from the seat cushion, the support plate 28 follows it to move vertically with the airbag 12 placed thereon.

As shown in Fig. 3(a), in this embodiment, the support plate 28 is a substantially rectangular flat plate extending along the width of the seat. The airbag 12 is disposed to extend laterally along the upper surface of the support plate 28. Also in this embodiment, the rod-like gas generator 14 is disposed inside the airbag 12. Also the gas generator 14 is disposed to extend laterally.

The left and right side frames 1a and 1b of the base frame 1 each include a support base 32 for elastically supporting the left and right ends of the support plate 28 from below via a coil spring 30.

As shown in Fig. 3(b), a guide shaft 34 which guides the vertical movement of the support plate 28 rises from the upper surface of each support base 32. The guide shafts 34 are passed through guide-shaft through holes (not shown) provided at the opposite ends of the support plate 28 and the opposite ends of the airbag 12, respectively. Reference numeral 36 denotes protection metal fittings mounted to the opposite ends of the airbag 12. The coil springs 30 are each disposed around the guide shaft 34 and the lower ends are in contact with the upper surface of the support base 32, while the upper ends are in contact with the lower surface of the support plate 28.

In this embodiment, the guide shaft 34 is a shoulder bolt of which the lower end is a male screw 34a, the middle is an axial rod 34b having a diameter larger than the male screw 34a, and the upper end is a fitting-retaining head (bolt head) 34c having a diameter larger than the axial rod 34b. The support base 32 has a female-screw hole (not shown) in the upper surface, into which the male screw 34a at the lower end of the guide shaft 34 is screwed. The axial rod 34b in the middle of each guide shaft 34 is passed through the respective guide-shaft through holes of the support plate 28 and the airbag 12. The bolt head 34c at the upper end serves as a stopper for the upward movement of the support plate 28 and the airbag 12.

The other structures of the occupant protection system 10B are the same as those of the occupant protection system 10 of Fig. 1.

In the occupant protection system 10B, the support plate 28 is disposed on the S-springs 2, on which the airbag 12 is disposed. Accordingly, when the airbag 12 is pushed downward via the seat cushion, the reaction force from the S-springs 2 is dispersed across the entire length of the airbag 12 owing to the support plate 28 and as such, the airbag 12 is supported substantially equally across the entire length via the support plate 28.

In this embodiment, the support plate 28 is disposed elastically so as to be moved vertically. Accordingly, when the seat cushion and the S-springs 2 are moved (deformed) vertically as an occupant sits or rises from the seat cushion, the support plate 28 follows it to move vertically with the airbag 12 placed thereon. Accordingly, the reduction of the cushion characteristic of the seat owing to the support plate 28 can be prevented or decreased.

It is to be understood that the foregoing embodiments are only examples of the present invention and the invention is not limited to the embodiments.

For example, although the gas generator 14 according to the embodiment of Fig. 3 is disposed inside the airbag 12, it may be disposed outside the airbag 12, as in the embodiment of Fig. 2. In that case, for example, the gas generator 14 may be disposed on the back etc. of the support plate 28.

## Claims

1. An occupant protection system comprising:
a seat frame having a seat cushion placed thereon;
an inflatable airbag disposed for pushing the front part of the seat cushion from below; and
a gas generator for inflating the airbag in an emergency;
wherein the airbag is disposed on an elastic body provided to the seat frame.

2. The occupant protection system according to Claim 1,
wherein the airbag extends along the lateral width of the seat and the elastic member extends longitudinally.

3. The occupant protection system according to Claim 1 or 2, wherein a support plate is disposed on the elastic body and the airbag is disposed on the support plate.

4. The occupant protection system according to Claim 3,
wherein the support plate is mounted elastically to the seat frame so as to move vertically.
